Europäisches Patentamt

European Patent Office

Office européen des brevets

(19)

(11) Numéro de publication: **0 203 001
B1**

(12) **FASCICULE DE BREVET EUROPEEN**

(45) Date de publication du fascicule du brevet:
**09.03.88**

(51) Int. Cl.⁴: **F 02 M 31/06,** F 16 K 1/16

(21) Numéro de dépôt: **86401022.8**

(22) Date de dépôt: **13.05.86**

(54) Col d'entrée d'air, notamment pour système d'admission d'air dans un moteur à combustion interne.

(30) Priorité: **17.05.85 FR 8507485
17.05.85 FR 8507486**

(43) Date de publication de la demande:
**26.11.86 Bulletin 86/48**

(45) Mention de la délivrance du brevet:
**09.03.88 Bulletin 88/10**

(84) Etats contractants désignés:
**DE GB IT SE**

(56) Documents cités:
**FR - A - 982 505
FR - A - 1 328 385
FR - A - 2 026 587
GB - A - 26 783
US - A - 1 366 965
US - A - 2 443 326**

(73) Titulaire: **ACIERS ET OUTILLAGE PEUGEOT Société
dite:, F-25400 Audincourt (Doubs) (FR)**

(72) Inventeur: **Clement, Pierre, 44 B, rue de Montbéliard,
F-25150 Pont-de-Roide (FR)**

(74) Mandataire: **Polus, Camille et al, c/o Cabinet
Lavoix 2, Place d'Estienne d'Orves, F-75441 Paris
Cedex 09 (FR)**

## Description

La présente invention est relative aux dispositifs d'alimentation en air des moteurs à combustion interne.

Plus précisément, l'invention se rapporte à un col d'entrée d'air pour système d'admission d'air dans un moteur de ce type.

Ces dispositifs sont généralement utilisés pour réguler la température de l'air admis dans le moteur, à une valeur de consigne. Les dispositifs de l'état de la technique comportent une chambre de mélange dans laquelle débouchent un conduit d'admission d'air froid tel que de l'air atmosphérique et un conduit d'admission d'air chaud provenant d'une partie «chaude» du moteur.

La régulation de température de l'air admis dans le moteur est réalisée par un seul volet commandé par un dispositif thermostatique. Ce volet est placé dans la convergence des deux conduits d'admission, de façon à permettre un réglage de l'admission de l'air chaud et de l'air froid dans le mélange. Cependant, ce type de dispositif présente un certain nombre d'inconvénients (voir FR-A-2026587).

En effet, ces dispositifs présentent un encombrement relativement important qui, dans certains cas, peut être gênant. De plus, en raison de la structure de tels dispositifs, l'écoulement de l'air n'est pas optimisé, ce qui entraîne des pertes de charge qui se traduisent par une diminution de la puissance disponible dans le moteur.

Un autre inconvénient de ces dispositifs réside dans le fait que le volet assurant la régulation de la température de l'air admis est actionné par une tringlerie et des renvois d'angle relativement complexes et coûteux à réaliser.

Le but de l'invention est donc de résoudre les problèmes évoqués ci-dessus.

A cet effet, l'invention a pour objet un col d'entrée d'air notamment pour système d'admission d'air dans un moteur à combustion interne, comportant une chambre de mélange dans laquelle débouchent un conduit d'admission d'air froid et un conduit d'admission d'air chaud et qui communique avec un conduit de sortie pour l'air de la chambre de mélange, et des moyens d'obturation réglable des conduits d'admission, l'un desdits conduits d'admission étant coaxial à la chambre de mélange, caractérisé en ce que les moyens d'obturation de ce conduit coaxial sont constitués par des volets articulés sur ledit conduit et actionnés par une pièce cylindrique montée déplaçable entre une position d'obturation complète du conduit d'admission par les volets et une position d'escamotage de ceux-ci.

Avantageusement, la pièce cylindrique constitue les moyens d'obturation de l'autre conduit d'admission.

Selon un mode de réalisation de l'invention, la pièce cylindrique est montée déplaçable suivant l'axe de la chambre de mélange.

Selon un autre mode de réalisation de l'invention, la pièce cylindrique est montée déplaçable autour de la chambre de mélange.

L'invention sera mieux comprise à l'aide de la description qui va suivre, donnée uniquement à titre d'exemple et faite en se référant aux dessins annexés, sur lesquels:

la fig. 1 représente une vue en coupe d'un premier mode de réalisation d'un col d'entrée d'air selon l'invention dans laquelle les moyens d'obturation des conduits d'admission d'air sont représentés dans leurs positions extrêmes;

la fig. 2 représente une vue en coupe suivant la ligne B-B de la fig. 1;

la fig. 3 représente une vue partielle, dans le sens indiqué par la flèche F de la fig. 1, des moyens d'obturation d'un des conduits d'admission d'air;

la fig. 4 représente une vue en coupe d'un second mode de réalisation d'un col d'entrée d'air selon l'invention dans laquelle les moyens d'obturation des conduits d'admission d'air sont représentés dans leurs positions extrêmes;

la fig. 5 représente une vue en coupe suivant la ligne B-B de la fig. 4, et

la fig. 6 représente une vue partielle, dans le sens indiqué par la flèche F de la figure 4, des moyens d'obturation d'un des conduits d'admission d'air.

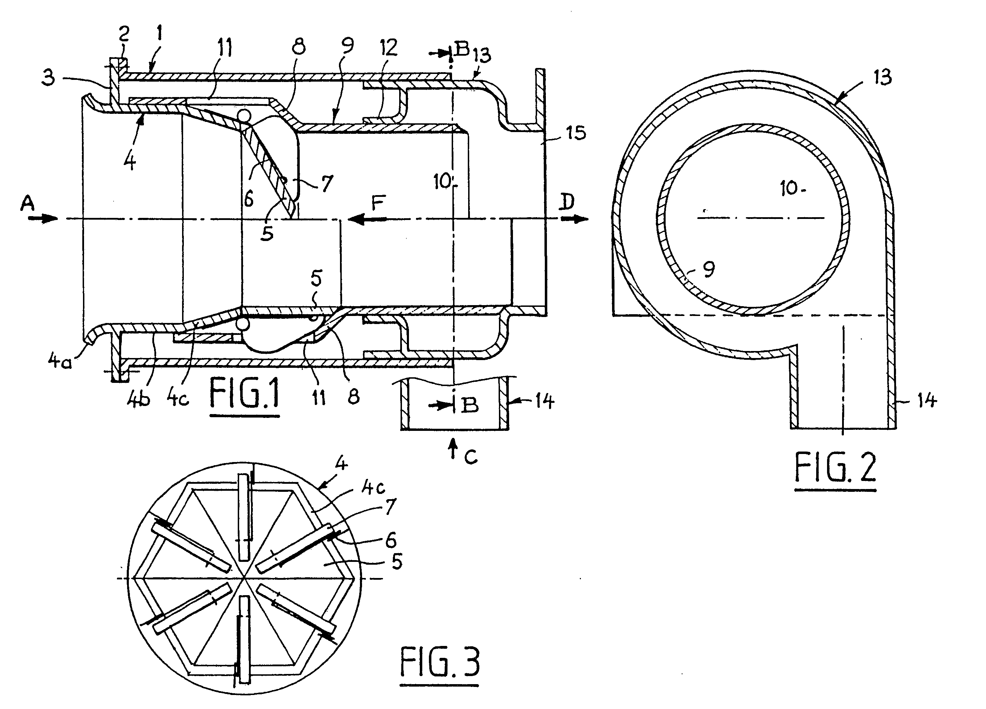

Comme on peut le voir sur la fig. 1, qui représente un premier mode de réalisation de l'invention, un col d'entrée d'air selon l'invention est constitué d'un corps cylindrique 1 comportant à l'une de ses extrémités un rebord annulaire 2 sur lequel prend appui et est fixé un rebord annulaire 3 d'un conduit d'admission d'air froid 4. Ce conduit d'admission 4 présente successivement, dans le sens indiqué par la flèche A représentant le sens de l'écoulement de l'air froid, une extrémité évasée 4a, une partie cylindrique 4b et une partie de paroi se présentant sous la forme d'un tronc de pyramide 4c qui peut avantageusement comporter six côtés. Le rebord annulaire 3 ainsi que ces trois parties sont avantageusement réalisés de moulage.

Sur chaque côté du tronc de pyramide 4c est articulé un volet 5.

Selon un premier mode de réalisation, ces volets 5 sont venus de matière avec le reste du conduit d'admission 4 et l'articulation est réalisée par une diminution de section à l'intersection du volet et du côté correspondant du tronc de pyramide. Selon un second mode de réalisation, les volets 5 sont réalisés séparément du conduit d'admission 4 et ils sont articulés sur celui-ci par l'intermédiaire de rubans adhésifs disposés sur les côtés du tronc de pyramide.

Dans les deux cas, un ressort de rappel 6, dont la fonction sera définie par la suite, est prévu sur chaque côté du tronc de pyramide 4c et le volet 5 correspondant.

Chaque volet 5 comporte également une ailette 7 solidaire de celui-ci et s'étendant dans un plan sensiblement perpendiculaire au plan du volet de façon à venir en appui contre un épaulement 8 d'une pièce cylindrique 9 montée déplaçable suivant l'axe d'une chambre de mélange 10 coaxiale au conduit d'admission d'air froid 4. Cette pièce cylindrique 9 est reliée à un organe d'actionnement d'un dispositif thermostatique (non représenté) connu en soi, et qui est constitué par exemple par une cartouche de cire. Le fonctionnement d'un tel dispositif sera décrit par la suite.

Comme on peut le voir, une extrémité de cette pièce cylindrique 9 prend appui sur la partie cylindrique 4b du conduit d'admission 4.

Un logement 11 qui peut avantageusement se présenter sous la forme d'un évidement est ménagé dans la pièce cylindrique 9 en regard d'une ailette 7 correspondante.

L'autre extrémité de ladite pièce cylindrique 9 prend appui sur un rebord 12 d'une chambre d'admission 13 entourant la chambre de mélange 10 et dans laquelle débouche un conduit d'admission d'air chaud 14 comme indiqué par la flèche C. Ainsi qu'on peut le voir, une extrémité du corps cylindrique 1 prend appui sur cette chambre 13.

Selon sa position, cette extrémité de la pièce cylindrique 9 permet ou non le passage de l'air chaud de la chambre d'admission 13 dans la chambre de mélange 10. Un conduit de sortie 15 est relié à cette chambre de mélange 10 de façon à permettre l'écoulement de l'air de cette chambre comme indiqué par la flèche D.

Comme on peut le voir sur la fig. 2, le conduit d'admission d'air chaud 4 débouche dans la chambre d'admission 13 qui selon la position de la pièce cylindrique 9 est en communication ou non avec la chambre de mélange 10.

Dans le mode de réalisation représenté, la chambre d'admission 13 est cylindrique et l'axe du conduit d'admission d'air chaud 14 est sensiblement perpendiculaire à l'axe de la chambre de mélange 10.

Comme il est représenté plus clairement sur la fig. 3, le conduit d'admission d'air froid 4 comporte une partie de paroi se présentant sous la forme d'un tronc de pyramide 4c sur les côtes duquel sont articulés des volets 5 se présentant chacun sous la forme générale d'un triangle, par l'intermédiaire de leur base. Comme on l'a vu, cette articulation peut être réalisée par une diminution de section à l'intersection de ces volets et des côtés du tronc de pyramide lorsque les volets sont venus de moulage avec le conduit d'admission 4. Selon une variante, lorsque les volets 5 sont réalisés séparément du conduit d'admission, ils peuvent être articulés sur celui-ci par l'intermédiaire de rubans adhésifs.

L'ailette 7 solidaire du volet 5 est munie par exemple d'un perçage recevant une extrémité du ressort de rappel 6 dont l'autre extrémité est solidaire du côté correspondant du tronc de pyramide 4c.

Le dispositif d'obturation du conduit d'admission 4 est donc constitué par six volets identiques permettant, lorsqu'ils sont en position d'obturation, d'empêcher tout écoulement d'air froid dans la chambre de mélange 10.

Le fonctionnement d'un tel dispositif est le suivant.

Comme on peut le voir sur la fig. 1, la pièce cylindrique 9 est montée à coulissement suivant l'axe de la chambre de mélange 10, entre celle-ci et la chambre d'admission 13, de sorte que lorsqu'elle se trouve dans la position représentée dans la partie supérieure de cette figure, l'épaulement 8 de celle-ci vient en appui contre l'ailette 7 solidaire du volet 5 de façon que celui-ci soit amené dans sa position d'obturation du conduit d'admission 4. Il va de soi que les autres volets sont également dans la même position. L'air froid arrivant selon le sens indiqué par la flèche A ne peut donc pas s'écouler dans la chambre de mélange 10 qui, par contre, reçoit de l'air chaud à travers l'espace libéré par la pièce cylindrique 9 entre la chambre d'admission 13 et la chambre de mélange 10. L'air admis dans le moteur, s'écoulant suivant le sens indiqué par la flèche D, est donc de l'air chaud.

Au contraire, et comme on peut le voir plus particulièrement sur la partie inférieure de cette fig. 1, lorsque la pièce cylindrique 9 est coulissée dans l'autre position, on peut constater qu'elle ferme la chambre d'admission 13, empêchant ainsi tout écoulement d'air chaud dans la chambre de mélange. Par contre, le rebord 8 de cette pièce cylindrique ayant libéré l'ailette 7, le ressort de rappel 6 agit sur le volet 5 de façon à l'escamoter du conduit d'admission d'air froid. Les ressorts de rappel 6 constituent donc des moyens de rappel en position escamotée des volets.

Dans cette position, les logements 11 reçoivent les ailettes 7 qui constituent des moyens d'actionnement des volets. La chambre de mélange ne reçoit donc que de l'air froid qui s'écoule dans le conduit de sortie 15.

Le coulissement de la pièce cylindrique 9 est assuré par le dispositif thermostatique sensible à la température de l'air admis dans le moteur. En effet, l'organe d'actionnement d'un tel dispositif a une certaine position pour une valeur de température de consigne. Selon que la température de l'air admis est supérieure ou inférieure à cette valeur de consigne, l'organe d'actionnement de celui-ci se déplace dans un sens ou dans l'autre, entraînant ainsi le coulissement de la pièce cylindrique suivant l'axe de la chambre de mélange et donc l'ouverture ou la fermeture des conduits d'admission d'air chaud ou d'air froid selon que la température de l'air admis est supérieure ou inférieure à la température de consigne.

Comme on peut le constater, le conduit d'admission d'air froid 4 est coaxial à la chambre de mélange 10 et les moyens d'obturation de ce conduit sont constitués par les volets 5 articulés sur celui-ci et actionnés par la pièce cylindrique 9 montée déplaçable suivant l'axe de la chambre de mélange 10 entre une position d'obturation complète de ce conduit d'admission par ces volets et une position d'escamotage de ceux-ci.

De plus, cette pièce cylindrique constitue comme on l'a vu les moyens d'obturation de l'autre conduit d'admission et elle est montée à coulissement suivant l'axe de la chambre de mélange entre une position d'obturation complète de ce conduit d'admission et une position escamotée.

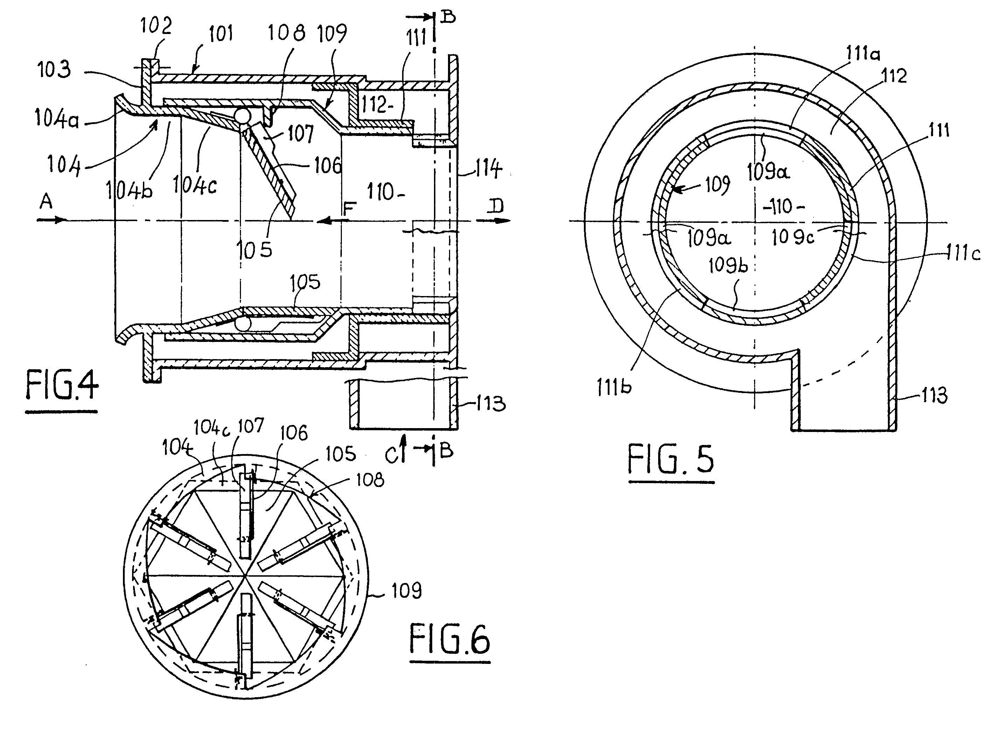

Comme on peut le voir sur la fig. 4, qui représente un second mode de réalisation de l'invention, un col d'entrée d'air selon l'invention est constitué d'un corps cylindrique 101 comportant à l'une de ses extrémités un rebord annulaire 102 sur lequel prend appui et est fixé un rebord annulaire 103 d'un conduit d'admission d'air froid 104. Ce conduit d'admission 104 présente successivement, dans le sens indiqué par la flèche A représentant le sens de l'écoulement de l'air froid, une extrémité évasée 104a, une partie cylindrique 104b et une partie de paroi se présentant sous la forme d'un tronc de pyramide 104c qui peut avantageusement comporter six côtés. Le rebord annulaire 103 ainsi que ces trois parties sont avantageusement réalisés de moulage.

Sur chaque côté du tronc de pyramide 104c est articulé un volet 105.

Selon un premier mode de réalisation, ces volets 105 sont venus de matière avec le reste du conduit d'admission 104 et l'articulation est réalisée par une diminution de section à l'intersection du volet et du côté correspondant du tronc de pyramide.

Selon un autre mode de réalisation, les volets 105 sont réalisés séparément du conduit d'admission 104 et ils sont articulés sur celui-ci par l'intermédiaire de rubans adhésifs disposés sur les côtés du tronc de pyramide.

Dans les deux cas, un ressort de rappel 106, dont la fonction sera définie par la suite, est prévu sur chaque côté du tronc de pyramide 104c et le volet 105 correspondant.

Chaque volet 105 comporte également une ailette 107 solidaire de celui-ci et s'étendant dans un plan sensiblement perpendiculaire au plan du volet, de façon à venir en appui contre un rebord 108, dont la forme sera définie par la suite, d'une pièce cylindrique 109 montée déplaçable autour d'une chambre de mélange 110 coaxiale au conduit d'admission d'air froid 104. Cette pièce cylindrique 109 est reliée à un organe d'actionnement d'un dispositif thermostatique (non représenté) connu en soi, et qui est constitué par exemple par une cartouche de cire. Le fonctionnement d'un tel dispositif sera décrit par la suite.

Comme on peut le voir, une extrémité de cette pièce cylindrique 109 prend appui sur la partie cylindrique 104b du conduit d'admission 104.

L'autre extrémité de ladite pièce cylindrique 109 prend appui sur une paroi 111 d'une chambre d'admission 112 entourant la chambre de mélange 110 et dans laquelle débouche un conduit d'admission d'air chaud 113 comme indiqué par la flèche C.

La chambre d'admission 112 et plus particulièrement la paroi 111 ainsi que l'extrémité correspondante de la pièce cylindrique 109 sont pourvues de lumières qui seront décrites plus en détail par la suite, permettant ou non, selon la position angulaire de la pièce cylindrique 109, le passage de l'air chaud de la chambre d'admission 112 dans la chambre de mélange 110.

Un conduit de sortie 114 est relié à cette chambre de mélange 110 de façon à permettre l'écoulement de l'air de cette chambre, comme indiqué par la flèche D.

Comme on peut le voir sur la fig. 5, le conduit d'admission d'air chaud 113 débouche dans la chambre d'admission 112 dont la paroi interne 111 présente avantageusement trois lumières 111a, 111b, 111c régulièrement réparties. Ainsi par exemple, ces trois lumières sont décalées de 120°. De même, la pièce cylindrique 109 comporte avantageusement trois lumières 109a, 109b, 109c également décalées de 120°. Comme on peut le voir sur la partie supérieure de cette fig. 5, la pièce cylindrique 109 est dans une position angulaire telle que les lumières 111a et 109a sont en regard l'une de l'autre, permettant ainsi à l'air chaud de la chambre d'admission 112 de pénétrer dans la chambre de mélange 110. Au contraire, dans la position angulaire de la pièce cylindrique 109, représentée dans la partie inférieure de cette figure, les lumières ne sont pas en regard les unes des autres, empêchant ainsi tout écoulement d'air chaud de la chambre d'admission 112 dans la chambre de mélange 110, les lumières de la paroi 111 étant obturées par les parties pleines de la pièce cylindrique 109.

Dans le mode de réalisation représenté, la chambre d'admission 112 est cylindrique et l'axe du conduit d'admission d'air chaud 113 est sensiblement perpendiculaire à l'axe de la chambre de mélange 110.

Comme il est représenté plus clairement sur la fig. 6, le conduit d'admission d'air froid 104 comporte une partie de paroi se présentant sous la forme d'un tronc de pyramide 104c sur les côtés duquel sont articulés des volets 105, se présentant chacun sous la forme générale d'un triangle, par l'intermédiaire de leur base. Comme on l'a vu, cette articulation peut être réalisée par une diminution de section à l'intersection de ces volets et des côtés du tronc de pyramide lorsque les volets sont venus de moulage avec le conduit d'admission 104. Selon une variante, lorsque les volets 105 sont réalisés séparément du conduit d'admission, ils peuvent être articulés sur celui-ci par l'intermédiaire de rubans adhésifs.

L'ailette 107 solidaire du volet 105 est munie par exemple d'un perçage recevant une extrémité d'un ressort de rappel 106 dont l'autre extrémité est solidaire du côté correspondant du tronc de pyramide 104c.

Le dispositif d'obturation du conduit d'admision 104 est donc constitué par six volets identiques permettant, lorsqu'ils sont en position d'obturation, d'empêcher tout écoulement d'air froid dans la chambre de mélange 110.

Comme il a déjà été mentionné précédemment, la pièce cylindrique 109 est montée à rotation autour de la chambre de mélange 110 et cette pièce cylindrique 109 comporte sur sa surface interne un rebord 108 dans lequel sont ménagées six rampes disposées en regard des ailettes 107. Ces rampes permettent, en fonction de la position angulaire de la pièce cylindrique 109, de déplacer les volets 105 de façon à escamoter complètement ces volets du conduit d'admission 104 ou les amener dans leur position d'obturation de ce conduit d'admission, comme il est représenté sur la fig. 6.

L'inclinaison et le nombre de ces rampes sont déterminés de manière connue en soi, en fonction du nombre de volets 105, de la dimension et de la répartition des lumières 109a, 109b, 109c et 111a,

111b, 111c, du déplacement angulaire de la pièce cylindrique 109, etc.

Ainsi qu'on peut le concevoir, la position angulaire de la pièce cylindrique 109 correspondant à l'obturation complète du conduit d'admission 104 par les voles 105 correspond à une position angulaire dans laquelle les lumières 109a, 109b et 109c de cette pièce cylindrique sont parfaitement en regard des lumières 111a, 111b et 111c de la chambre d'admission, de façon que l'air admis dans la chambre de mélange soit de l'air chaud.

La position angulaire de la pièce cylindrique 109 correspondant à l'escamotage complet des volets 105 du conduit d'admission 104 correspond, quant à elle, à une position d'obturation complète des lumières 111a, 111b, 111c de la paroi de la chambre d'admission 112 par les parties pleines de la pièce cylindrique 109.

Le fonctionnement d'un tel dispositif est le suivant.

Comme on peut le voir sur la fig. 4, la pièce cylindrique 109 est montée à rotation autour de la chambre de mélange 110, entre celle-ci et la chambre d'admission 112, de sorte que lorsqu'elle se trouve dans la position angulaire extrême représentée dans la partie supérieure de cette figure, la rampe correspondante du rebord 108 de celle-ci vient en appui contre l'ailette 107 solidaire du volet 105, de façon que celui-ci soit amené dans sa position d'obturation du conduit d'admission 104.

Il va de soi que les autres volets sont également dans la même position. L'air froid arrivant dans le sens indiqué par la flèche A ne peut donc pas s'écouler dans la chambre de mélange 110 qui, par contre, reçoit de l'air chaud à travers les lumières 111a, 111b, 111c de la chambre d'admission 112 et les lumières 109a, 109b et 109c de la pièce cylindrique 109, qui, en raison de la position angulaire de celle-ci, se trouvent en regard.

L'air admis dans le moteur, s'écoulant dans le sens indiqué par la flèche D, est donc de l'air chaud.

Au contraire, et comme on peut le voir plus particulièrement sur la partie inférieure de cette fig. 4, lorsque la pièce cylindrique 109 se trouve dans l'autre position extrême, on peut constater que les volets 105 sont complètement escamotés du conduit d'admission 104, tandis que les lumières 111a, 111b, 111c de la chambre d'admission 112 sont complètement obturées par les parties pleines de la pièce cylindrique 109. Dans cette position, le rebord 108 ayant libéré l'ailette 107, le ressort de rappel 106 agit sur le volet 105 de façon à l'escamoter du conduit d'admission d'air froid. Les ressorts de rappel 106 constituent donc des moyens de rappel en position escamotée des volets, tandis que le rebord 108 dans lequel sont ménagées les rampes coopérant avec les ailettes 107 des volets 105 constitue des moyens d'actionnement de ces volets.

Dans la position représentée dans la partie inférieure de la fig. 4, la chambre de mélange 110 ne reçoit donc que de l'air froid qui s'écoule dans le conduit de sortie 114.

Le déplacement en rotation de la pièce cylindrique 109 est assuré par le dispositif thermostatique sensible à la température de l'air admis dans le moteur. En effet, l'organe d'actionnement d'un tel dispositif a une certaine position pour une valeur de température de consigne. Selon que la température de l'air admis est supérieure ou inférieure à cette valeur de consigne, l'organe d'actionnement de celui-ci se déplace dans un sens ou dans l'autre, entraînant ainsi le déplacement en rotation de la pièce cylindrique autour de la chambre de mélange et donc l'ouverture ou la fermeture des conduits d'admission d'air froid ou d'air chaud selon que la température de l'air admis est supérieure ou inférieure à la température de consigne.

Comme on peut le constater, le conduit d'admission d'air froid 104 est coaxial à la chambre de mélange 110 et les moyens d'obturation de ce conduit sont constitués par les volets 105 articulés sur celui-ci et actionnés par la pièce cylindrique 109 montée déplaçable autour de la chambre de mélange entre une position d'obturation complète de ce conduit d'admission par ces volets et une position d'escamotage de ceux-ci.

De plus, cette pièce cylindrique constitue, comme on l'a vu, des moyens d'obturation de l'autre conduit d'admission et elle est montée déplaçable autour de la chambre de mélange entre une position d'obturation complète de ce conduit d'admission et une position escamotée.

Bien que dans les modes de réalisation décrits le conduit d'admission coaxial à la chambre de mélange soit le conduit d'admission d'air froid, il peut également être le conduit d'admission d'air chaud.

**Revendications**

1. Col d'entrée d'air, notamment pour système d'admission d'air dans un moteur à combustion interne, comportant une chambre de mélange (10, 110) dans laquelle débouchent un conduit (4, 104) d'admission d'air froid et un conduit (14, 113) d'admission d'air chaud et qui communique avec un conduit (15, 114) de sortie pour l'air de la chambre de mélange, et des moyens d'obturation réglable des conduits d'admission, l'un (4, 104) desdits conduits d'admission étant coaxial à la chambre de mélange (10, 110), caractérisé en ce que les moyens d'obturation de ce conduit coaxial (4, 104) sont constitués par des volets (5, 105) articulés sur ledit conduit (4, 104) et actionnés par une pièce cylindrique (9, 109) montée déplaçable entre une position d'obturation complète du conduit d'admission par ces volets et une position d'escamotage de ceux-ci.

2. Col d'entrée d'air selon la revendication 1, caractérisé en ce que ladite pièce cylindrique (9, 109) constitue les moyens d'obturation de l'autre conduit d'admission (14, 113).

3. Col d'entrée d'air selon la revendication 1 ou 2, caractérisé en ce que la pièce cylindrique (9) est montée déplaçable suivant l'axe de la chambre de mélange (10).

4. Col d'entrée d'air selon la revendication 1, 2 ou 3, caractérisé en ce que la pièce cylindrique (9) est montée à coulissement suivant l'axe de la chambre de mélange (10) entre une position d'obturation complète de l'autre conduit d'admission (14) et une position escamotée.

5. Col d'entrée d'air selon la revendication 4, caractérisé en ce que la pièce cylindrique (9) est montée à coulissement axial entre la chambre de mélange (10) et une chambre d'admission (13) dans laquelle débouche l'autre conduit d'admission (14).

6. Col d'entrée d'air selon l'une quelconque des revendications précédentes, caractérisé en ce que le conduit d'admission coaxial (4) à la chambre de mélange (10) comporte une partie de paroi se présentant sous la forme d'un tronc de pyramide (4c) à n côtés et en ce que chaque volet (5) se présente sous la forme générale d'un triangle dont la base est articulée sur un côté correspondant du tronc de pyramide (4c).

7. Col d'entrée d'air selon la revendication 6, caractérisé en ce que les volets (5) sont venus de moulage avec les côtés du tronc de pyramide (4c), en ce que l'articulation est réalisée par une diminution de section à l'intersection entre chaque volet et chaque côté du tronc de pyramide (4c) et en ce qu'il est prévu des moyens (6) de rappel en position escamotée pour chaque volet.

8. Col d'entrée d'air selon la revendication 6, caractérisé en ce que les volets sont réalisés séparément du conduit d'admission (4), en ce que l'articulation de chaque volet (5) sur le côté correspondant du tronc de pyramide (4c) est constitué par un ruban adhésif et en ce qu'il est prévu des moyens (6) de rappel en position escamotée pour chaque volet.

9. Col d'entrée d'air selon les revendications 7 ou 8, caractérisé en ce que les moyens de rappel sont constitués par un ressort (6) dont une extrémité est solidaire du côté correspondant du tronc de pyramide et dont l'autre extrémité est solidaire du volet.

10. Col d'entrée d'air selon l'une quelconque des revendications précédentes, caractérisé en ce que les volets (5) comprennent des moyens d'actionnement (7) coopérant avec un épaulement (8) prévu sur la pièce cylindrique (9).

11. Col d'entrée d'air selon la revendication 10, caractérisé en ce que les moyens d'actionnement sont constitués par une ailette (7) solidaire de chaque volet (5) et s'étendant dans un plan sensiblement perpendiculaire au plan du volet.

12. Col d'entrée d'air selon la revendication 10 ou 11, caractérisé en ce que la pièce cylindrique (9) comporte des logements (11) ménagés en regard des moyens d'actionnement (7) et destinés à recevoir ces derniers lorsque les volets (5) sont en position escamotée.

13. Col d'entrée d'air selon la revendication 6, caractérisé en ce que n est égal à 6.

14. Col d'entrée d'air selon l'une quelconque des revendications précédentes, caractérisé en ce que le conduit d'admission coaxial (4) à la chambre de mélange (10) est constitué par le conduit d'admission d'air froid.

15. Col d'entrée d'air selon la revendication 1 ou 2, caractérisé en ce que ladite pièce cylindrique (109) est montée déplaçable autour de la chambre de mélange (110).

16. Col d'entrée d'air selon la revendication 1, 2 ou 15, caractérisé en ce que la pièce cylindrique (109) est montée à rotation entre la chambre de mélange (110) et une chambre d'admission (112) dans laquelle débouche l'autre conduit d'admission (113), entre une position dans laquelle des lumières (109a, 109b, 109c) ménagées dans ladite pièce cylindrique (109) sont disposées en regard de lumières (111a, 111b, 111c) ménagées dans une paroi (111) de la chambre d'admission (112) et une position d'obturation des lumières (111a, 111b, 111c) de la chambre d'admission (112) par des parties pleines de la pièce cylindrique (109).

17. Col d'entrée d'air selon l'une quelconque des revendications 1, 2, 15 ou 16, caractérisé en ce que le conduit d'admission coaxial à la chambre de mélange (110) comporte une partie de paroi se présentant sous la forme d'un tronc de pyramide (104c) à n côtés et en ce que chaque volet (105) se présente sous la forme générale d'un triangle dont la base est articulée sur un côté correspondant du tronc de pyramide (104c).

18. Col d'entrée d'air selon la revendication 17, caractérisé en ce que les volets (105) sont venus de moulage avec les côtés du tronc de pyramide (104c), en ce que l'articulation est réalisée par une diminution de section à l'intersection entre chaque volet et chaque côté du tronc de pyramide (104c) et en ce qu'il est prévu des moyens de rappel en position escamotée pour chaque volet.

19. Col d'entrée d'air selon la revendication 17, caractérisé en ce que les volets sont réalisés séparément du conduit d'admission (104), en ce que l'articulation de chaque volet (105) sur le côté correspondant du tronc de pyramide (104c) est constituée par un ruban adhésif et en ce qu'il est prévu des moyens (106) de rappel en position escamotée pour chaque volet.

20. Col d'entrée d'air selon les revendications 18 ou 19, caractérisé en ce que les moyens de rappel sont constitués par un ressort (106) dont une extrémité est solidaire du côté correspondant du tronc de pyramide et dont l'autre extrémité est solidaire du volet.

21. Col d'entrée d'air selon l'une quelconque des revendications 1, 2, 16, 17, 18, 19 ou 20, caractérisé en ce que la pièce cylindrique (109) comporte des moyens d'actionnement (108) des volets, coopérant avec une ailette (107) solidaire de chaque volet (105) et s'étendant dans un plan sensiblement perpendiculaire au plan du volet, de façon à déplacer les volets (105), entre une position d'obturation complète du conduit d'admission (104) par ces volets et une position escamotée.

22. Col d'entrée d'air selon la revendication 21, caractérisé en ce que les moyens d'actionnement sont constitués par un rebord (108) disposé sur la paroi interne de la pièce cylindrique (109) et dans lequel sont ménagées n rampes, chacune desdites rampes étant disposée en regard d'une ailette (107) correspondante.

23. Col d'entrée d'air selon l'une des revendications 17, 18 ou 22, caractérisé en ce que n est égal à 6.

24. Col d'entrée d'air selon l'une quelconque des revendications 1, 2, 15, 16, 17, 18, 19, 20, 21, 22 ou 23, caractérisé en ce que le conduit d'admission coaxial (104) à la chambre de mélange (110) est constitué par le conduit d'admission d'air froid.

## Patentansprüche

1. Lufteintrittsstutzen insbesondere für ein Lufteinlasssystem eines Verbrennungsmotors, bestehend aus einer Mischkammer (10, 110), in die ein Kaltlufteinlasskanal (4, 104) und ein Heisskanal (14, 113) münden und die mit einem Kanal (15, 114) zum Austritt der Luft aus der Mischkammer in Verbindung ist, und aus Einrichtungen zum regulierbaren Verschluss der Einlasskanäle, wobei einer (4, 104) der Einlasskanäle zu der Mischkammer (10, 110) koaxial ist, dadurch gekennzeichnet, dass die Einrichtungen zum Verschluss des koaxialen Kanals (4, 104) aus Klappen (5, 105) bestehen, die an dem Kanal (4, 104) angelenkt sind und durch ein zylindrisches Teil (9, 109) betätigt sind, das zwischen einer Stellung, in der der Einlasskanal durch diie Klappen vollständig verschlossen ist, und einer Stellung, in der diese weggeklappt sind, bewegbar ist.

2. Lufteintrittsstutzen nach Anspruch 1, dadurch gekennzeichnet, dass das zylindrische Teil (9, 109) die Einrichtungen zum Verschluss des anderen Einlasskanals (14, 113) bildet.

3. Lufteintrittsstutzen nach Anspruch 1 oder 2, dadurch gekennzeichnet, dass das zylindrische Teil (9) in der Achse der Mischkammer (10) bewegbar montiert ist.

4. Lufteintrittsstutzen nach Anspruch 1, 2 oder 3, dadurch gekennzeichnet, dass das zylindrische Teil (9) in der Achse der Mischkammer (10) zwischen einer Stellung, in der der andere Einlasskanal (14) vollständig geschlossen ist, und einer weggeklappten Stellung verschiebbar ist.

5. Lufteintrittsstutzen nach Anspruch 4, dadurch gekennzeichnet, dass das zylindrische Teil (9) axial verschiebbar zwischen der Mischkammer (10) und einer Einlasskammer (13) montiert ist, in die der andere Einlasskanal (14) mündet.

6. Lufteintrittsstutzen nach einem der vorhergehenden Ansprüche, dadurch gekennzeichnet, dass der zu der Mischkammer (10) koaxiale Einlasskanal (4) einen Wandteil in Form eines Pyramidenstumpfes (4c) mit n Seiten besitzt und dass jede Klappe (5) die Form eines Dreiecks hat, dessen Basis aneiner entsprechenden Seite des Pyramidenstumpfes (4c) angelenkt ist.

7. Lufteintrittsstutzen nach Anspruch 6, dadurch gekennzeichnet, dass die Klappen (5) mit den Seiten des Pyramidenstumpfes (4c) einstückig ausgebildet sind, dass das Gelenk aus einer Querschnittsverringerung an der Schnittstelle zwischen jeder Klappe und jeder Seite des Pyramidenstumpfes (4c) besteht und dass Einrichtungen (6) zur Rückholung jeder Klappe in die weggeklappte Stellung vorgesehen sind.

8. Lufteintrittsstutzen nach Anspruch 6, dadurch gekennzeichnet, dass die Klappen von dem Einlasskanal (4) getrennt gebildet sind, dass das Gelenk jeder Klappe (5) zur Anlenkung an der entsprechenden Seite des Pyramidenstumpfes (4c) aus einem Klebeband besteht und dass Einrichtungen (6) zur Rückholung jeder Klappe in die weggeklappte Stellung vorgesehen sind.

9. Lufteintrittsstutzen nach den Ansprüchen 7 oder 8, dadurch gekennzeichnet, dass die Rückholeinrichtungen aus einer Feder (6) bestehen, deren eines Ende an der entsprechenden Seite des Pyramidenstumpfes und deren anderes Ende an der Klappe befestigt ist.

10. Lufteintrittsstutzen nach einem der vorhergehenden Ansprüche, dadurch gekennzeichnet, dass die Klappen (5) Betätigungseinrichtungen (7) besitzen, die mit einer an dem zylindrischen Teil (9) vorgesehenen Schulter (8) zusammenwirken.

11. Lufteintrittsstutzen nach Anspruch 10, dadurch gekennzeichnet, dass die Betätigungseinrichtungen aus einem an jeder Klappe (5) befestigten Flügel (7) bestehen, der sich in einer zur Ebene der Klappe im wesentlichen senkrechten Ebene erstreckt.

12. Lufteintrittsstutzen nach Anspruch 10 oder 11, dadurch gekennzeichnet, dass das zylindrische Teil (9) gegenüber den Betätigungseinrichtungen (7) angeordnete Aussparungen (11) besitzt, die zur Aufnahme der Betätigungseinrichtungen dienen, wenn die Klappen (5) in der weggeklappten Stellung sind.

13. Lufteintrittsstutzen nach Anspruch 6, dadurch gekennzeichnet, dass n gleich 6 ist.

14. Lufteintrittsstutzen nach einem der vorhergehenden Ansprüche, dadurch gekennzeichnet, dass der zur Mischkammer (10) koaxiale Einlasskanal (4) den Kaltlufteinlasskanal bildet.

15. Lufteintrittsstutzen nach Anspruch 1 oder 2, dadurch gekennzeichnet, dass das zylindrische Teil (109) um die Mischkammer (110) herum bewegbar montiert ist.

16. Lufteintrittsstutzen nach Anspruch 1, 2 oder 15, dadurch gekennzeichnet, dass das zylindrische Teil (109) zwischen der Mischkammer (110) und einer Einlasskammer (112), in die der andere Einlasskanal (113) mündet, zwischen einer Stellung, in der in dem zylindrischen Teil (109) vorgesehene Öffnungen (109a, 109b, 109c) gegenüber in einer Wand (111) der Einlasskammer (112) vorgesehenen Öffnungen (111a, 111b, 111c) angeordnet sind, und einer Stellung, in der die Öffnungen (111a, 111b, 111c) der Einlasskammer (112) durch volle Teile des zylindrischen Teils (109) verschlossen sind, drehbar montiert ist.

17. Lufteintrittsstutzen nach einem der Ansprüche 1, 2, 15 oder 16, dadurch gekennzeichnet, dass der zur Mischkammer (110) koaxiale Einlasskanal einen Wandteil in Form eines Pyramidenstumpfes (104c) mit n Seiten besitzt und dass jede Klappe (105) die Form eines Dreiecks hat, dessen Basis an einer entsprechenden Seite des Pyramidenstumpfes (104c) angelenkt ist.

18. Lufteintrittsstutzen nach Anspruch 17, dadurch gekennzeichnet, dass die Klappen (105) mit den Seiten des Pyramidenstumpfes (104c) einstückig ausgebildet sind, dass das Gelenk aus einer Querschnittsverringerung an der Schnittstelle zwischen jeder Klappe und jeder Seite des Pyramidenstumpfes (104c) besteht und dass Einrichtungen zur Rückholung jeder Klappe in die weggeklappte Stellung vorgesehen sind.

19. Lufteintrittsstutzen nach Anspruch 17, dadurch gekennzeichnet, dass die Klappen von dem Einlasskanal (104) getrennt gebildet sind, dass das Gelenk zur Anlenkung jeder Klappe (104) an der entsprechenden Seite des Pyramidenstumpfes (104c) aus einem Klebeband besteht und dass Einrichtungen (106) zur Rückholung jeder Klappe in die weggeklappte Stellung vorgesehen sind.

20. Lufteintrittsstutzen nach einem der Ansprüche 18 oder 19, dadurch gekennzeichnet, dass die Rückholeinrichtungen aus einer Feder (106) bestehen, deren eines Ende an der entsprechenden Seite des Pyramidenstumpfes und deren anderes Ende an der Klappe befestigt ist.

21. Lufteintrittsstutzen nach einem der Ansprüche 1, 2, 16, 17, 18, 19 oder 20, dadurch gekennzeichnet, dass das zylindrische Teil (109) Einrichtungen (108) zur Betätigung der Klappen besitzt, die mit einem an jeder Klappe (105) befestigten Flügel (107), der sich in einer zur Ebene der Klappe im wesentlichen senkrechten Ebene erstreckt, so zusammenwirken, dass die Klappen (105) zwischen einer Stellung, in der der Einlasskanal (104) durch die Klappen vollständig verschlossen ist, und einer weggeklappten Stellung bewegt werden.

22. Lufteintrittsstutzen nach Anspruch 21, dadurch gekennzeichnet, dass die Betätigungseinrichtungen aus einer auf der Innenwand des zylindrischen Teils (109) vorgesehenen Schulter (108) bestehen, in der n Abschrägungen vorgesehen sind, deren jede gegenüber einem entsprechenden Fflügel (107) angeordnet ist.

23. Lufteintrittsstutzen nach einem der Ansprüche 17, 18 oder 22, dadurch gekennzeichnet, dass n gleich 6 ist.

24. Lufteintrittsstutzen nach einem der Ansprüche 1, 2, 15, 16, 17, 18, 19, 20, 21, 22 oder 23, dadurch gekennzeichnet, dass der zu der Mischkammer (110) koaxiale Einlasskanal (104) aus dem Kaltlufteinlasskanal besteht.

## Claims

1. Air intake pipe, particularly for an air induction system in an internal combustion engine, possessing a mixing chamber (10, 110) into which open a cold air intake duct (4, 104) and a hot air intake duct (14, 113) and which communicates with an outlet duct (15, 114) for the air from the mixing chamber, and adjustable closing means for the intake ducts, one (4, 104) of the said intake ducts being coaxial with the mixing chamber (10, 110), characterized in that the means for closing this coaxial duct (4, 104) are constituted by flaps (5, 105) articulated on the said duct (4, 104) and actuated by a cylindrical component (9, 109) mounted to be displaceable between a position in which the intake duct is completely closed by these flaps and a position of retraction of the latter.

2. Air intake pipe according to Claim 1, characterized in that the said cylindrical component (9, 109) constitutes the means of closing the other intake duct (14, 113).

3. Air intake pipe according to Claim 1 or 2, characterized in that the cylindrical component (9) is mounted to be displaceable along the axis of the mixing chamber (10).

4. Air intake pipe according to Claim 1, 2 or 3, characterized in that the cylindrical component (9) is mounted to be slideable along the axis of the mixing chamber (10) between a position in which the other intake duct (14) is completely closed and a retracted position.

5. Air intake pipe according to Claim 4, characterized in that the cylindrical component (9) is mounted to be axially slideable between the mixing chamber (10) and an induction chamber (13) into which the other intake duct (14) opens.

6. Air intake pipe according to any one of the preceding claims, characterized in that the coaxial intake duct (4) to the mixing chamber (10) possesses a wall section in the form of a truncated pyramid (4c) having n sides and in that each flap (5) has the general form of a triangle whose base is articulated on a corresponding side of the truncated pyramid (4c).

7. Air intake pipe according to Claim 6, characterized in that the flaps (5) are cast with the sides of the truncated pyramid (4c), in that the articulation is achieved by a reduction in section at the intersection between each flap and each side of the truncated pyramid (4c) and in that means (6) are provided for restoring each flap into the retracted position.

8. Air intake pipe according to Claim 6, characterized in that the flaps are produced separately from the intake duct (4), in that the articulation of each flap on the corresponding side of the truncated pyramid (4c) is constituted by an adhesive strip and in that means (6) are provided for restoring each flap into the retracted position.

9. Air intake pipe according to Claim 7 or 8, characterized in that the restoring means are constituted by a spring (6), one end of which is fixed to the corresponding side of the truncated pyramid and the other end of which is fixed to the flap.

10. Air intake pipe according to any one of the preceding claims, characterized in that the flaps (5) comprise actuation means (7) interacting with a shoulder (8) provided on the cylindrical component (9).

11. Air intake pipe according to Claim 10, characterized in that the actuating means are constituted by a fin (7) fixed to each flap (5) and extending in a plane substantially perpendicular to the plane of the flap.

12. Air intake pipe according to Claim 10 or 11, characterized in that the cylindrical component (9) possesses seatings (11) made facing the actuating means (7) and intended to accommodate the latter when the flaps (5) are in the retracted position.

13. Air intake pipe according to Claim 6, characterized in that the n is equal to 6.

14. Air intake pipe according to any one of the preceding claims, characterized in that the coaxial intake duct (4) to the mixing chamber (10) is constituted by the cold air intake duct.

15. Air intake pipe according to Claim 1 or 2, characterized in that the said cylindrical component (109) is mounted to be displaceable about the mixing chamber (110).

16. Air intake pipe according to Claim 1, 2 or 15, characterized in that the cylindrical component (109) is mounted to rotate between the mixing chamber (110) and an induction chamber (112) into which the other intake duct (113) opens, between a position in which ports (109a, 109b, 109c) provided in the said cylindrical component (109) are situated facing ports (111a, 111b, 111c) provided in a wall (111) of the induction chamber (112) and a position in which the ports (111a, 111b, 111c) of the induction chamber (112) are closed by continuous parts of the cylindrical component (109).

17. Air intake pipe according to any one of Claims 1, 2, 15 and 16, characterized in that the coaxial intake duct to the mixing chamber (110) comprises a wall section in the form of a truncated pyramid (104c), having n sides, and in that each flap (105) takes the general form of a triangle whose base is articulated on the corresponding side of the truncated pyramid (104c).

18. Air intake pipe according to Claim 17, characterized in that the flaps (105) are cast with the sides of the truncated pyramid (104c) in that the articulation is achieved by a reduction in section at the intersection between each flap and each side of the truncated pyramid (104c) and in that means are provided for restoring each flap into the retracted position.

19. Air intake pipe according to Claim 17, characterized in that the flaps are produced separately from the intake duct (104) in that the articulation of each flap (105) on the corresponding side of the truncated pyramid (104c) is constituted by an adhesive strip, and in that means (106) are provided for restoring each flap into the retracted position.

20. Air intake pipe according to Claims 18 or 19, characterized in that restoring means are constituted by a spring (106), one end of which is fixed to the corresponding side of the truncated pyramid and the other end of which is fixed to the flap.

21. Air intake pipe according to any one of Claims 1, 2, 16, 17, 18, 19, 20, characterized in that the cylindrical component (109) possesses actuating means (108) for the flaps, interacting with a fin (107) fixed to each flap (105) and extending in a plane substantially perpendicular to the plane of the flap, in a manner such as to displace the flaps (105) between a position in which the intake duct (104) is completely closed by these flaps and a retracted position.

22. Air intake pipe according to Claim 21, characterized in that the actuation means are constituted by a flange (108) arranged on the internal wall of the cylindrical component (109) and in which are provided n ramps, each of the said ramps being arranged facing a corresponding fin (107).

23. Air intake pipe according to one of Claims 17, 18 and 22, characterized in that n is equal to 6.

23. Air intake pipe according to any one of Claims 1, 2, 15, 16, 17, 18, 19, 20, 21, 22, 23, characterized in that the coaxial intake pipe (104) to the mixing chamber (110) is constituted by the cold air intake duct.

FIG.1

FIG.2

FIG.3

0 203 001

FIG.4

FIG.5

FIG.6

13

0 203 001